# EUROPEAN PATENT SPECIFICATION

(11) **EP 4 286 217 B1**
(45) Date of publication and mention of the grant of the patent: **08.04.2026**
(21) Application number: 23176657.7
(22) Date of filing: 01.06.2023
(51) Int. Cl.: B60N 2/20, B60N 2/06, B60N 2/24, B60N 2/42

(54) **IMPROVED ANTI-MINE SEAT**
VERBESSERTER MINENSCHUTZSITZ
SIÈGE ANTI-MINES AMÉLIORÉ

(30) Priority: 03.06.2022 IT 202200011792
(43) Date of publication of application: 06.12.2023
(73) Proprietor: IDV DEFENCE VEHICLES ITALIA S.P.A., 39100 Bolzano (IT)
(72) Inventor: LOMBARDO, Silvio, 10060 ROLETTO (TO) (IT); GOTTARDINI, Mauro, 39100 BOLZANO (IT); FERRARI, Massimo, 39100 BOLZANO (IT)
(74) Representative: Studio Torta S.p.A.

(56) References cited:
- EP-A1- 0 756 960
- CN-U- 208 069 475
- US-A- 4 470 629
- US-A1- 2018 229 628

## Description

### TECHNICAL FIELD

The present invention relates to a vehicular seat, in particular to an improved anti-mine seat.

The present invention is preferably, although not exclusively, applied to a military vehicle. Reference will be made to such application in the following by way of example.

### STATE OF THE PRIOR ART

Some types of vehicles, such as military vehicles or emergency vehicles in war zones, can be provided with anti-mine seats.

Such seats are made of multilayer materials configured to prevent the transmission of impacts and accelerations due to explosions, such as explosions of mines.

However, military or emergency vehicles in a war zone can also be used for the carriage of material or wounded/sick people who need to be placed lying.

Therefore, military or emergency vehicles in a war zone comprise cabs configured in a sick/wounded people carriage mode, i.e. provided with litters or stretchers. Such cabs communicate with a passenger seat in communication with the space housing the sick/wounded person. Such passenger seat is normally placed such that the passenger can have view of the road.

In conditions of stop or assistance to the sick/wounded person, the need is known of having to handle the passenger seat for being directed towards the inside of the vehicular cab for assisting the sick/wounded person.

However, the aforementioned reconfiguration of the anti-mine seat requires time and is thus a difficult operation, thus not suitable to emergency or war situations.

Examples of known seat in vehicular field are disclosed in patent publications US2018229628 A1, EP0756960 A1, US4470629 A or CN208069475 U.

Therefore, the need is felt to provide an anti-mine seat for a military or emergency vehicle in a war zone which can allow the reconfiguration thereof in a quick and facilitated manner.

The object of the present invention is to satisfy the above-described needs in an optimized and cost-effective manner.

### SUMMARY OF THE INVENTION

The aforementioned object is achieved by an anti-mine seat, a vehicular cab and a vehicle as claimed in the appended claims.

### BRIEF DESCRIPTION OF THE DRAWINGS

In order to better understand the present invention, a preferred embodiment is described in the following, by way of non-limiting example and with reference to the accompanying drawings, wherein:

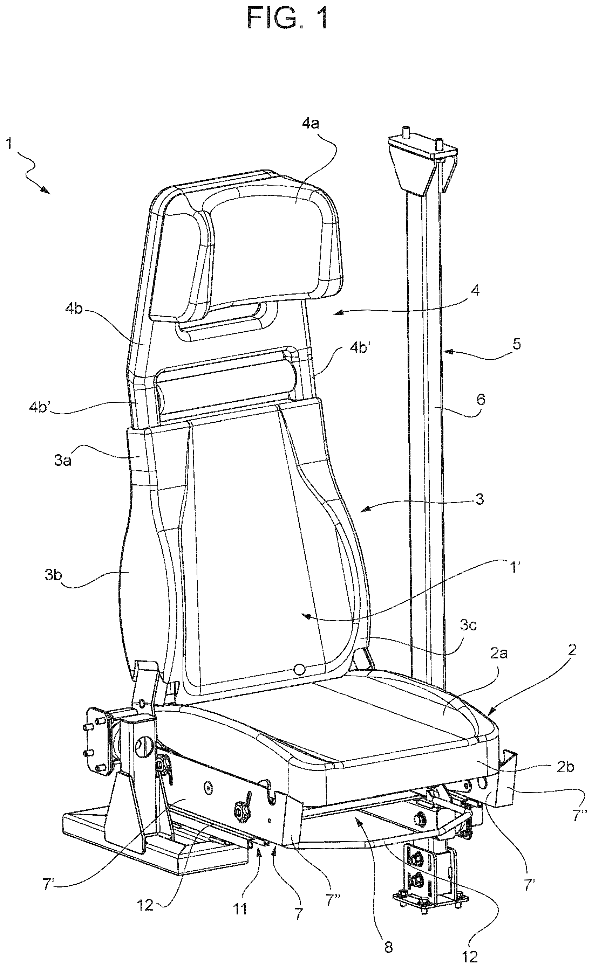

- Figure 1 is a simplified perspective view, with parts removed for clarity, of an anti-mine seat according to the invention;

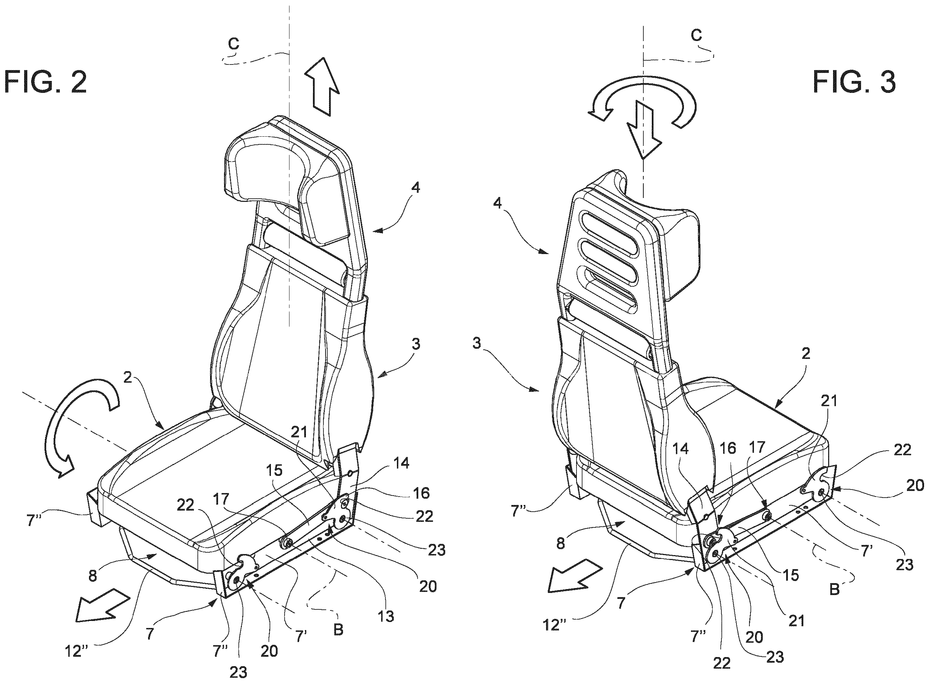

- Figures 2 and 3 are perspective views in different operating steps of the anti-mine seat according to the invention; and
- Figures from 4 to 6 are schematic side views of a vehicular cab comprising an anti-mine seat according to the invention.

### DETAILED DESCRIPTION OF THE INVENTION

The accompanying figures illustrate an anti-mine seat 1 for a cab 100 for a vehicle (not completely illustrated) of military or emergency type in a war zone. The following description will refer to a cab provided with a sick carriage system and to a particular arrangement of the described seats. However, it is evident that the described vehicle can be used for various military or emergency purposes, and the seats could be placed in the cab in different positions.

In particular, with reference to figures from 4 to 6, the cab 100 comprises a plurality of walls 200 connected to one another for defining a space 300 extending along a longitudinal axis A of the vehicle. In particular, the plurality of walls 200 comprise a pair of side walls 200a, a floor 200b, a roof 200c, a front wall 200d and a rear wall (not visible in the drawings).

The seat 1 is advantageously housed in a front part of the space 3, whereas the rear part is configured to accommodate a sick carriage system 400, such as a litter or other equivalent systems.

The seat 1 essentially comprises a seating 2, a backrest 3 and a headrest 4 connected to one another for defining a space 1' adapted to house a passenger of the vehicle, i.e. to allow the seating of said passenger.

In particular, the seat 1 is carried by a support structure 5 configured to enable the connection of the seat 1 to the vehicular cab 100.

In particular, the support structure 5 essentially comprising a connection bar 6 fixed at the ends thereof to the floor 200b and to the roof 200c and adapted to support a cantilevered portion 7.

Such cantilevered portion 7 is advantageously carried in a rigid manner by the connection bar 6 at a predefined height with respect to the floor 200b and defines a housing 8 adapted to contain, at least partly, a part of the seating 2, as is described in the following.

Specifically, the seating 2, the backrest 3 and the headrest 4 are connected to one another in a selectively movable manner so as to be reconfigured between one another such that the seat 1 can pass between a first driving configuration, wherein the space 1' of seating is directed towards the front wall 200d and a second assistance configuration, wherein the space 1 is directed towards the sick carriage system 400.

More specifically, the support structure 5 is configured to support the seating 2 in a movable manner along a direction parallel to the longitudinal axis A of the vehicle.

Advantageously, the seating 2 is carried by the support structure 5 via linear support means 11 adapted to allow the sliding of the seating 2 with respect to the cantilevered portion 7.

Specifically, the cantilevered portion comprises two side portions 7' and such linear support means 11 comprise linear guides 12' defined between the side portions 7' and the seating 2. In particular, such linear guides 12' can be activated via control means 12'' such as a lever adapted to selectively allow the sliding of the seating 12 on the linear portions 7'.

The backrest 3 is carried in a movable manner by the cantilevered portion 7 with respect to the seating 2 such to be disposed, from a first configuration, fixed near a front edge, to a second configuration, fixed near a rear edge of the seating 2.

Specifically, the backrest 3 is connected to the cantilevered portion 7 via a lever mechanism 13 configured to allow the rotation of the backrest 3 with respect to a transversal axis B, i.e. an axis parallel to the front and rear edges of the seating 2, in particular a transversal axis with respect to the longitudinal axis A of the vehicle.

In particular, a lever mechanism 13 is provided operatively interposed between each side, left and right, of the backrest 3 with respect to the seating 2. In the following, only one of the two lever mechanisms 13 is thus described.

The lever mechanism 13 comprises a crank 15 hinged at a first end via a first hinge 16 to a flange 14 integrally carried by a lower portion of the backrest 3 and hinged at a second end via a second hinge 17 about a point defining the axis of rotation B.

Advantageously, the making point of the second hinge 17 is equidistant from the front and rear edges of the seat 2 and is made on the side portions 7' of the cantilevered portion 7.

Consequently, the flange 14 can perform a rotation about the axis B, with radius equal to the extension of the crank 15, rotating about the second hinge 17, between the aforementioned first and second configurations.

The flange 14 is limited in the rotation about the aforementioned axis B within a predetermined angular position via respective end stops.

Advantageously, such end stops are made integrated in the side portions 7' of the cantilevered portion 7 and comprise respective end walls 7" extending cantilevered from the side portions 7' and configured to cooperate in contact with the flange 14 for stopping the stroke thereof.

Preferably, such end parts 7'' are inclined by an angle such that the flange 14, cooperating with them, defines a predefined inclination of the backrest 3 with respect to the seating 2 which enables obtaining a suitable space 1' for housing a passenger.

The lever mechanism 13 further comprises locking means 20 configured to selectively lock the flange 14 at the cantilevered portion 7 in the aforementioned two configurations.

In particular, the locking means 20 comprise a pair of hook elements 21 each defining a seat 22 and respectively carried via a respective hinge 23 by the side portions 7. The hinge 23 is configured to allow the rotation of the hinge element 21 about an axis parallel to the axis B. In the illustrated embodiment, they are vertically placed inferiorly with respect to the hinge 17.

The seat 22 is dimensioned so as to house inside it the hinge 16, in a removable manner, when the crank 15 is placed in one of the aforementioned configurations.

Whereas, the headrest 4 is carried in a selectively removable manner by the backrest 4. In particular, the headrest 4 comprises a main portion 4a adapted to cooperate with the head of the passenger and a connection portion 4b configured to carry the main portion 4a and connect the latter to the backrest 3.

Specifically, the connection portion 4b comprises a pair of end portions 4b' configured to fit inside respective seats (not visible) obtained in the backrest 3 and cooperating in contact with them. In particular, the insertion and the extraction of the headrest 4 with respect to the backrest 3 takes place along a vertical axis C perpendicular to the axis of rotation B of the backrest 3.

The backrest 3 essentially comprises an upper portion 3a configured to define the seats adapted to house the end portions 4b' of the headrest 4, a lower portion 3c opposite the upper portion 3a and an intermediate portion 3b joining the upper portion 3a and the lower portion 3c.

The seating 2 comprises a contact portion 2a configured to cooperate in contact with the passenger and a structural portion 2b, which carries the contact portion 2a, partially housed in the housing 8 and operatively connected to the linear support means 11.

Both the backrest 3 and the seating 2 have a shape symmetrical with respect to the respective frontal and sagittal planes passing along the respective centreline between the front and rear and side edges, respectively, of the backrest 3 and of the seating 2. Therefore, according to what above-described, the portions 3a, 3b, 3c of the backrest 3 and the portion 2a of the seating 2 are symmetrical with respect to the aforementioned frontal and sagittal planes.

The portions of the seat 1 are made of an anti-mine material, or structured as such, according to known types and modes and thus not further described for the sake of brevity.

The operation of the embodiment of the above-described anti-mine seat 1 is as follows.

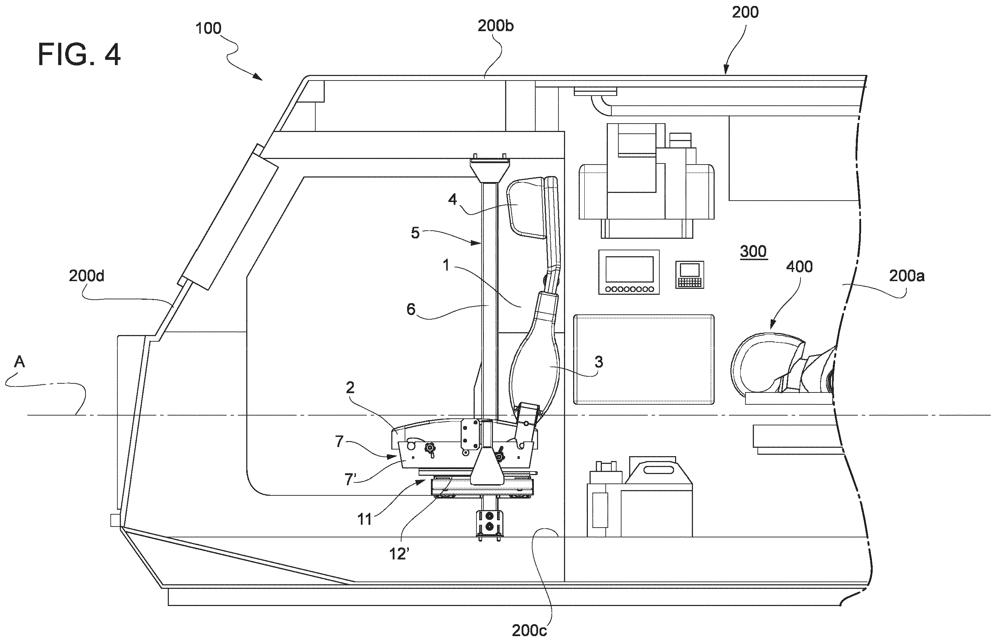

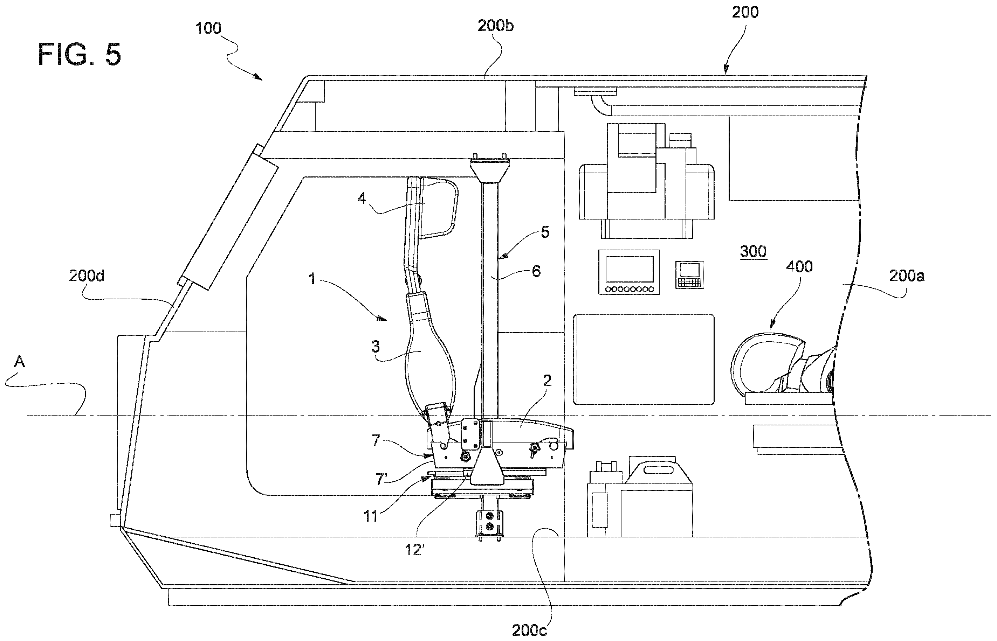

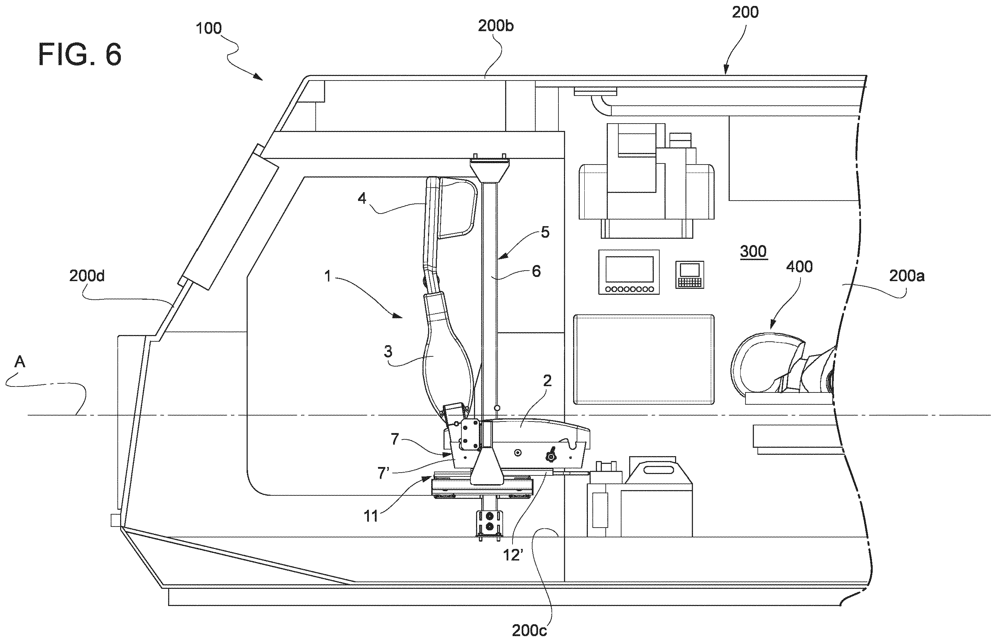

In a first configuration illustrated in Figure 4, the seat 1 faces the front wall 200d and thus in driving mode. Should the driver want to pass to a sick assistance configuration, he/she will act unlocking the lever mechanism 13 acting via the locking means 20 and will make the backrest 3 rotate about the axis B of hinge 17. Once rotated the backrest 3 and reached the final position, the driver can lock it acting again on the locking means 20. In particular, the locking/unlocking of the lever mechanism 13 takes place by rotating the hook element 21 disengaging the seat 22 from the hinge 16. In such position, the driver thus removes the headrest 4 from the seat in the backrest 3, rotating it about the axis C consistently with the backrest 3, before reinserting it in the aforementioned seats. Once carried out the aforementioned operations, the seat is in the configuration of Figure 5 and the distance from the sick carriage device 400 can be adjusted by acting on the linear support means which allow the sliding along the longitudinal axis A drawing close or moving away the seat 1 to/from the sick carriage device 400.

The opposite operation is not described for the sake of brevity, but clearly comprises the same steps carried out in opposite order.

Based on the foregoing, the advantages of an anti-mine seat according to the invention are evident.

Thanks to the improved anti-mine seat, it is possible to reconfigure the position of the seat inside the vehicular cab so that it is ergonomic both in the driving position and in the sick assistance position.

In particular, the handling takes place in a guided manner and via particularly compact and cost-effective means which do not increase the bulks inside the vehicular space.

Finally, it is clear that modifications and variations can be made to the vehicular cab according to the present invention which however do not depart from the scope of protection defined by the claims.

For example, the type of sick carriage device or the shape of the anti-mine seat, and the components comprised by it, can vary.

Similarly, the linear support means or the lever mechanism or the locking means can be replaced by devices having similar function.

Clearly, the seat can be reconfigured for assuming different facing positions of the space 1' with respect to those described.

## Claims

1. Vehicular cab (100) comprising a plurality of walls (200) defining a space (300) extending along a longitudinal axis (A) and housing an anti-mine seat (1), said anti-mine seat (1) being carried by a portion (7) integral with said cab (100) and comprising a seating (2), a backrest (3) and a headrest (4) connected to one another to define a space (1') for seating a passenger, said seating (2), said backrest (3) and said headrest (4) being connected to one another in a selectively movable manner to assume a first operational configuration wherein said space (1') is directed towards a first portion of said vehicle and a second operational configuration wherein said space (1') is directed towards a second portion of said vehicle, on the opposite side with respect to said longitudinal axis (A),
wherein said backrest (3) is connected to said portion (7) integral with said cab (100) via at least one lever mechanism (13), said lever mechanism (13) being configured to allow the rotation of said backrest (3) about an axis of rotation (B) so as to dispose said backrest (3) between a position near a rear edge of said seating (2) and a position near a front edge of said seating (2),
wherein said portion (7) integral with said cab (100) comprises end stops configured to prevent the rotation of said backrest (3) beyond a predetermined threshold,
wherein said at least one lever mechanism (13) comprises a crank (15) hinged at a first end via a first hinge (16) to said backrest (3) and at a second end via a second hinge (17) to said portion (7) integral with said cab (100), said second hinge (17) defining said axis of rotation (B),
wherein end stops are integrated in said portion (7) integral with said cab (100) and wherein said backrest (3) comprises at least one flange (14) connected via said first hinge (16) to said crank (15), said end stops comprising a wall (7") of said portion (7) configured to cooperate in contact with said flange (14).

2. Vehicular cab as claimed in claim 1, wherein said seat (1) comprises linear support means (11) configured to allow the displacement of said seating (2) with respect to said portion (7) integral with said cab (100).

3. Vehicular cab as claimed in any of the preceding claims, comprising locking means (20) configured to selectively lock said lever mechanism (13) in one of said two positions of said backrest (3) with respect to said seating (2).

4. Vehicular cab as claimed in claim 3, wherein said locking means (20) comprise a hook element (21) configured to selectively engage said first hinge (16).

5. Vehicular cab as claimed in any of the preceding claims, wherein said headrest (4) comprises a contact portion (4a) configured to cooperate with the head of said passenger and a connection portion (4b) supporting said contact portion (4a) and connected to said backrest (3), said connection portion (4b) comprising a pair of end portions (4b') configured to fit in seats obtained in said backrest (3).

6. Vehicular cab as claimed in any of the preceding claims, wherein said backrest (3) and said seating (2) have a shape symmetrical with respect to a sagittal plane of said seat (1).

7. Vehicular cab as claimed in any of the preceding claims, wherein said backrest (3) and said seating (2) have a shape symmetrical with respect to a frontal plane thereof passing through the centreline of respectively said backrest (3) and said seating (2).

8. Military or emergency type vehicle comprising a vehicular cab as claimed in any of the preceding claims.

## Patentansprüche

1. Fahrzeugkabine (100), umfassend eine Vielzahl von Wänden (200), die einen Raum (300) begrenzen, der sich entlang einer Längsachse (A) erstreckt und einen Anti-Minen-Sitz (1) aufnimmt, wobei der Anti-Minen-Sitz (1) von einem mit der Kabine (100) integralen Abschnitt (7) getragen wird, und
umfassend eine Sitzfläche (2), eine Rückenlehne (3) und eine Kopfstütze (4), die miteinander verbunden sind, um einen Raum (1') zum Sitzen eines Passagiers zu begrenzen, wobei die Sitzfläche (2), die Rückenlehne (3) und die Kopfstütze (4) in einer selektiv beweglichen Weise miteinander verbunden sind, um eine erste Betriebskonfiguration, in der der Raum (1') zu einem ersten Bereich des Fahrzeugs gerichtet ist, und eine zweite Betriebskonfiguration, in der der Raum (1') zu einem zweiten Bereich des Fahrzeugs auf der gegenüberliegenden Seite in Bezug auf die Längsachse (A) gerichtet ist, anzunehmen,
wobei die Rückenlehne (3) mit dem mit der Kabine (100) integralen Abschnitt (7) über mindestens einen Hebelmechanismus (13) verbunden ist, wobei der Hebelmechanismus (13) konfiguriert ist, um die Drehung der Rückenlehne (3) um eine Drehachse (B) zu ermöglichen, um die Rückenlehne (3) zwischen einer Position nahe einer Hinterkante der Sitzfläche (2) und einer Position nahe einer Vorderkante der Sitzfläche (2) anzuordnen,
wobei der mit der Kabine (100) integrale Abschnitt (7) Endanschläge umfasst, die konfiguriert sind, um die Drehung der Rückenlehne (3) über einen vorbestimmten Schwellenwert hinaus zu begrenzen,
wobei der mindestens eine Hebelmechanismus (13) eine Kurbel (15) umfasst, die an einem ersten Ende über ein erstes Scharnier (16) an der Rückenlehne (3) und an einem zweiten Ende über ein zweites Scharnier (17) an dem mit der Kabine (100) integralen Abschnitt (7) angelenkt ist, wobei das zweite Scharnier (17) die Drehachse (B) definiert,
wobei Endanschläge in dem mit der Kabine (100) integralen Abschnitt (7) integriert sind und die Rückenlehne (3) mindestens einen Flansch (14) umfasst, der über das erste Scharnier (16) mit der Kurbel (15) verbunden ist, wobei die Endanschläge eine Wand (7") des Abschnitts (7) umfassen, die konfiguriert ist, um in Kontakt mit dem Flansch (14) zusammenzuwirken.

2. Fahrzeugkabine nach Anspruch 1, wobei der Sitz (1) lineare Lagermittel (11) umfasst, die konfiguriert sind, um die Verschiebung der Sitzfläche (2) in Bezug auf den mit der Kabine (100) integralen Abschnitt (7) zu ermöglichen.

3. Fahrzeugkabine nach einem der vorhergehenden Ansprüche, umfassend Verriegelungsmittel (20), die konfiguriert sind, um den Hebelmechanismus (13) in einer der zwei Positionen der Rückenlehne (3) in Bezug auf die Sitzfläche (2) selektiv zu verriegeln.

4. Fahrzeugkabine nach Anspruch 3, wobei die Verriegelungsmittel (20) ein Hakenelement (21) umfassen, das konfiguriert ist, um selektiv in das erste Scharnier (16) einzugreifen.

5. Fahrzeugkabine nach einem der vorhergehenden Ansprüche, wobei die Kopfstütze (4) einen Kontaktabschnitt (4a) umfasst, der konfiguriert ist, um mit dem Kopf des Passagiers zusammenzuwirken, und einen Verbindungsabschnitt (4b), der den Kontaktabschnitt (4a) trägt und mit der Rückenlehne (3) verbunden ist, wobei der Verbindungsabschnitt (4b) ein Paar Endabschnitte (4b') umfasst, die konfiguriert sind, um in Sitze zu passen, die durch die Rückenlehne (3) erhalten werden.

6. Fahrzeugkabine nach einem der vorhergehenden Ansprüche, wobei die Rückenlehne (3) und die Sitzfläche (2) eine Form aufweisen, die in Bezug auf eine Sagittalebene des Sitzes (1) symmetrisch ist.

7. Fahrzeugkabine nach einem der vorhergehenden Ansprüche, wobei die Rückenlehne (3) und die Sitzfläche (2) eine Form aufweisen, die in Bezug auf eine Frontalebene davon symmetrisch ist, die durch die Mittellinie der Rückenlehne (3) bzw. der Sitzfläche (2) verläuft.

8. Militär- oder Notfallfahrzeug, umfassend eine Fahrzeugkabine nach einem der vorhergehenden Ansprüche.

## Revendications

1. Cabine de véhicule (100) comprenant une pluralité de parois (200) définissant un espace (300) s'étendant le long d'un axe longitudinal (A) et logeant un siège antimine (1), ledit siège antimine (1) étant supporté par une partie (7) solidaire de ladite cabine (100) et comprenant une assise (2), un dossier (3) et un appuie-tête (4) reliés entre eux pour définir un espace (1') d'assise d'un passager, ladite assise (2), ledit dossier (3) et ledit appuie-tête (4) étant reliés entre eux de manière sélectivement mobile pour adopter une première configuration opérationnelle dans laquelle ledit espace (1') est dirigé vers une première partie dudit véhicule et une seconde configuration opérationnelle dans laquelle ledit espace (1') est dirigé vers une seconde partie dudit véhicule, du côté opposé par rapport audit axe longitudinal (A),
dans laquelle ledit dossier (3) est relié à ladite partie (7) solidaire de ladite cabine (100) via au moins un mécanisme à levier (13), ledit mécanisme à levier (13) étant configuré pour permettre la rotation dudit dossier (3) autour d'un axe de rotation (B) de manière à disposer ledit dossier (3) entre une position proche d'un bord arrière de ladite assise (2) et une position proche d'un bord avant de ladite assise (2),
dans laquelle ladite partie (7) solidaire de ladite cabine (100) comprend des butées d'arrêt configurées pour empêcher la rotation dudit dossier (3) au-delà d'un seuil prédéterminé,
dans laquelle ledit au moins un mécanisme à levier (13) comprend une manivelle (15) articulée à une première extrémité via une première charnière (16) audit dossier (3) et à une seconde extrémité via une seconde charnière (17) à ladite partie (7) solidaire de ladite cabine (100), ladite seconde charnière (17) définissant ledit axe de rotation (B),
dans laquelle des butées d'arrêt sont intégrées dans ladite partie (7) solidaire de ladite cabine (100) et dans laquelle ledit dossier (3) comprend au moins une bride (14) reliée via ladite première charnière (16) à ladite manivelle (15), lesdites butées d'arrêt comprenant une paroi (7") de ladite partie (7) configurée pour coopérer au contact de ladite bride (14).

2. Cabine de véhicule selon la revendication 1, dans laquelle ledit siège (1) comprend des moyens de support linéaires (11) configurés pour permettre le déplacement de ladite assise (2) par rapport à ladite partie (7) solidaire de ladite cabine (100).

3. Cabine de véhicule selon l'une quelconque des revendications précédentes, comprenant des moyens de verrouillage (20) configurés pour verrouiller sélectivement ledit mécanisme à levier (13) dans l'une desdites deux positions dudit dossier (3) par rapport à ladite assise (2).

4. Cabine de véhicule selon la revendication 3, dans laquelle lesdits moyens de verrouillage (20) comprennent un élément de type crochet (21) configuré pour venir en prise sélectivement avec ladite première charnière (16).

5. Cabine de véhicule selon l'une quelconque des revendications précédentes, dans laquelle ledit appuie-tête (4) comprend une partie de contact (4a) configurée pour coopérer avec la tête dudit passager et une partie de liaison (4b) supportant ladite partie de contact (4a) et reliée audit dossier (3), ladite partie de liaison (4b) comprenant une paire de parties d'extrémité (4b') configurée pour s'adapter aux sièges obtenus dans ledit dossier (3).

6. Cabine de véhicule selon l'une quelconque des revendications précédentes, dans laquelle ledit dossier (3) et ladite assise (2) ont une forme symétrique par rapport à un plan sagittal de ladite assise (1).

7. Cabine de véhicule selon l'une quelconque des revendications précédentes, dans laquelle ledit dossier (3) et ladite assise (2) ont une forme symétrique par rapport à un plan frontal de ceux-ci passant respectivement par l'axe central dudit dossier (3) et de ladite assise (2).

8. Véhicule de type militaire ou d'urgence comprenant une cabine de véhicule selon l'une quelconque des revendications précédentes.
